# EUROPÄISCHE PATENTSCHRIFT

(11) **EP 1 404 554 B1**
(45) Veröffentlichungstag und Bekanntmachung des Hinweises auf die Patenterteilung: **09.12.2009**
(21) Anmeldenummer: 02751123.7
(22) Anmeldetag: 09.07.2002
(51) Int. Cl.: B60T 8/00

(54) **SYSTEM ZUR FAHRDYNAMIKREGELUNG**
SYSTEM FOR CONTROLLING DRIVING DYNAMICS
SYSTEME DE REGLAGE DE LA DYNAMIQUE DE TRANSLATION DE VEHICULES

(30) Priorität: 10.07.2001 DE 10132576
(43) Veröffentlichungstag der Anmeldung: 07.04.2004
(73) Patentinhaber: Lucas Automotive GmbH, 56070 Koblenz (DE)
(72) Erfinder: EINIG, Frank, 56076 Koblenz (DE); HOFFMANN, Elmar, 54438 Kinheim (DE); KNECHTGES, Josef, 56727 Mayen (DE); BLESER, Michael, 56637 Plaidt (DE)
(74) Vertreter: Schmidt, Steffen J.
(86) Internationale Anmeldenummer: PCT/EP2002/007652
(87) Internationale Veröffentlichungsnummer: WO 2003/006292

(56) Entgegenhaltungen:
- EP-A- 0 842 836
- EP-A- 0 881 114
- DE-A- 19 637 193
- DE-A- 19 733 674

## Beschreibung

Die Erfindung betrifft ein System zur Fahrdynamikregelung, das über das Bremssystem und den Antriebsstrang eines Fahrzeugs wirkt, um ein seitliches Ausbrechen des Fahrzeugs zu verhindern.

Ein System zur Fahrdynamikregelung (FDR) verbessert über die Vorteile des Antiblockiersystems (ABS), das ein Blockieren der Räder beim Bremsen verhindern, und der Antriebsschlupfregelung (ASR), die das Durchdrehen der Räder beim Antreiben vermeidet, hinaus die Fahrsicherheit wesentlich, da es den Fahrer in querdynamisch kritischen Situationen aktiv unterstützt. Bekannterweise wirkt die Fahrdynamikregelung im Bremssystem, um bei unter- oder übersteuernden Fahrverhalten durch vom Fahrer unabhängiges Abbremsen einzelner Räder die Fahrstabilität aktiv wiederherzustellen. So wird beim Untersteuern das kurveninnere Hinterrad und beim Übersteuern das kurvenäussere Vorderrad aktiv abgebremst. Es ist auch bekannt, dass die Fahrdynamikregelung dabei im Antriebsstrang eingreift, um durch Zurücknahme des Motormomentes das Antriebsmoment bzw. den Antriebsschlupf an den angetriebenen Rädern zu reduzieren, wenn bei frontgetriebenen Fahrzeugen einem Untersteuern oder bei heckgetriebenen Fahrzeugen einem Übersteuern entgegenzuwirken ist.

Die EP-A-0 842 836 beschreibt ein System zur Fahrdynamikregelung. Beim Bremsvorgang wird ausgehend von einer Bremskraft eine Antriebskraft erzeugt, die die Bremskraft zumindest teilweise kompensiert. Dadurch kann ein Fahrzeug von einer aktuellen Fahrzeugbewegung in eine Zielbewegung, die der Lenkrichtung entspricht, gesteuert werden. Durch dieses Regelsystem kann bei Betätigung des Fahrzeugbremspedals durch einen Fahrzeugführer eine ausreichende Abbremsung des Fahrzeugs erreicht werden, wobei die Fahrzeugstabilität beibehalten wird.

Die Erfindung hat sich die Aufgabe gestellt ein vorgenanntes System zur Fahrdynamikregelung noch leistungsfähiger für den Fall auszugestalten, dass ein Übersteuern des Fahrzeugs auszugleichen ist.

Zur Lösung der Aufgabe wird vorgeschlagen, dass zum Verhindern eines Übersteuern des Fahrzeugs über das Bremssystem an dem kurvenäusseren Vorderrad ein Bremsmoment erzeugt wird und über den Antriebsstrang an den angetriebenen Rädern ein zusätzliches Antriebsmoment aufgebaut wird. Zuerst wird das zusätzliche Antriebsmoment an den angetriebenen Rädern aufgebaut und erst dann, wenn das Übersteuern des Fahrzeugs nach einer vorherbestimmten Zeitdauer nicht abnimmt, wird das Bremsmoment an dem kurvenäusseren Vorderrad erzeugt. Es wird also eine bestimmte Zeitdauer abgewartet, ob sich das Fahrverhalten allein aufgrund des an den angetriebenen Rädern aufgebauten zusätzliche Antriebsmomentes stabilisiert.

Grundsätzlich könnten das Erzeugen des Bremsmomentes an dem kurvenäusseren Vorderrad und das Aufbauen des zusätzlichen Antriebsmomentes an den angetriebenen Rädern gleichzeitig erfolgen.

Der grosse Vorteil der Erfindung besteht darin, dass durch das zusätzliche Antriebsmoment eine weitere Komponente erzeugt wird, die der Gierbewegung des Fahrzeugs beim Übersteuern entgegenwirkt. Von wesentlichem Vorteil ist dabei, dass die durch das zusätzliche Antriebsmoment erzeugte weitere Komponente an einem anderen Rad des Fahrzeugs, als dem mit dem Bremsmoment beaufschlagten kurvenäusseren Vorderrad, wirkt. Dadurch werden die Gegenmomente zum Abfangen der Gierbewegung des Fahrzeugs beim Übersteuern auf mehrere Räder verlagert. Insgesamt betrachtet resultiert daraus sowohl ein Sicherheitsgewinn, da sich die Systemleistung erhöht, als auch ein Komfortgewinn, da der Regelvorgang harmonischer und somit für den Fahrer rückwirkungsfreier abläuft.

Auch besteht kein Risiko, dass aufgrund des zusätzlich aufgebauten Antriebsmomentes an einem oder mehreren angetriebenen Rädern ein zu hoher Schlupf auftritt, der die Traktion und die Fahrzeugstabilität wieder nachteilig beeinflussen würde. Weil die Fahrdynamikregelung auf der Antriebsschlupfregelung aufbaut und deren ohnehin vorhandene Komponenten mitverwendet, kann eine der Fahrdynamikregelung je nach Systemauslegung über-oder untergeordnete Antriebsschlupfregelung eingreifen, wenn aufgrund des zusätzlich aufgebauten Antriebsmomentes der Schlupf an einem oder mehreren angetriebenen Rädern einen vorherbestimmten Wert überschreitet.

Um den harmonischen Regelvorgang durch für den Fahrer wahrnehmbare Lastwechselreaktionen nicht zu stören, wird das an dem kurvenäusseren Vorderrrad erzeugte Bremsmoment erst dann aufgebaut, wenn das zusätzliche Antriebsmoment an den angetriebenen Rädern einen vorherbestimmten Wert erreicht hat.

Vorzugsweise ist das an dem kurvenäusseren Vorderrad erzeugte Bremsmoment grössenordnungsmässig doppelt so gross, wie das an einem angetriebenen Rad zuvor zusätzlich aufgebaute Antriebsmoment.

Das erfindungsgemässe System ist für Fahrzeuge mit Front- oder Heck-oder Allradantrieb gleichermassen einsetzbar.

Insbesondere bei Fahrzeugen mit Allradantrieb braucht zur Fahrdynamikregelung nicht mehr durch Umschaltung des Mitteldifferentials auf Frontantrieb umgeschaltet werden, so dass die Vorteile des erfindungsgemässen Systems besonders zum Tragen kommen, da für Allradantrieb im Prinzip die für Front-und Heckantrieb implementierten Regelvorgänge superponiert werden können.

Insbesondere dann, wenn das zusätzliche Antriebsmoment an den Hinterrädern aufgebaut wird, was bei einem Fahrzeug mit Heck-oder Allradantrieb der Fall ist, kann an dem kurvenäusseren Hinterrad ein zusätzliches Bremsmoment erzeugt werden. Dadurch wird das an dem kurvenäusseren Hinterrad zusätzlich aufgebaute Antriebsmoment kompensiert, so dass das am kurveninneren Hinterrad zusätzlich aufgebaute Antriebsmoment das am kurvenäusseren Vorderrad erzeugte Bremsmoment noch stärker unterstützt, um der Gierbewegung des Fahrzeugs beim Übersteuern entgegenzuwirken.

Um das an dem kurvenäusseren Hinterrad zusätzlich aufgebaute Antriebsmoment vollständig zu kompensieren, wird das an dem kurvenäusseren Hinterrad zusätzlich erzeugte Bremsmoment grössenordnungsmässig gleich gross eingestellt, wie das an dem kurveninneren Hinterrad zuvor aufgebaute Antriebsmoment.

Wenn abgewartet werden soll, ob sich das Fahrverhalten ohne das zusätzliche Bremsmoment an dem kurvenäusseren Hinterrad zu erzeugen stabilisiert, kann das zusätzliche Bremsmoment an dem kurvenäusseren Hinterrad erst dann erzeugt werden, wenn das Übersteuern des Fahrzeugs nach einer vorherbestimmten Zeitdauer nicht abnimmt.

Zum Vermeiden von für den Fahrer wahrnehmbaren Lastwechselreaktionen besteht die Möglichkeit, dass das zusätzliche Bremsmoment an dem kurvenäusseren Hinterrad erst dann erzeugt wird, wenn das an dem kurvenäusseren Hinterrad erzeugte Antriebsmoment einen vorherbestimmten Wert erreicht hat.

Nachfolgend werden die Erfindung und deren weitere Merkmale anhand eines Ausführungsbeispiels mit Zeichnung näher erläutert. Dazu zeigt
- Fig. 1: das Ausführungsbeispiel für ein frontgetriebenes,
- Fig. 2: das Ausführungsbeispiel für ein heckgetriebenes,
- Fig. 3: das Ausführungsbeispiel für ein allradgetriebenes Fahrzeug.

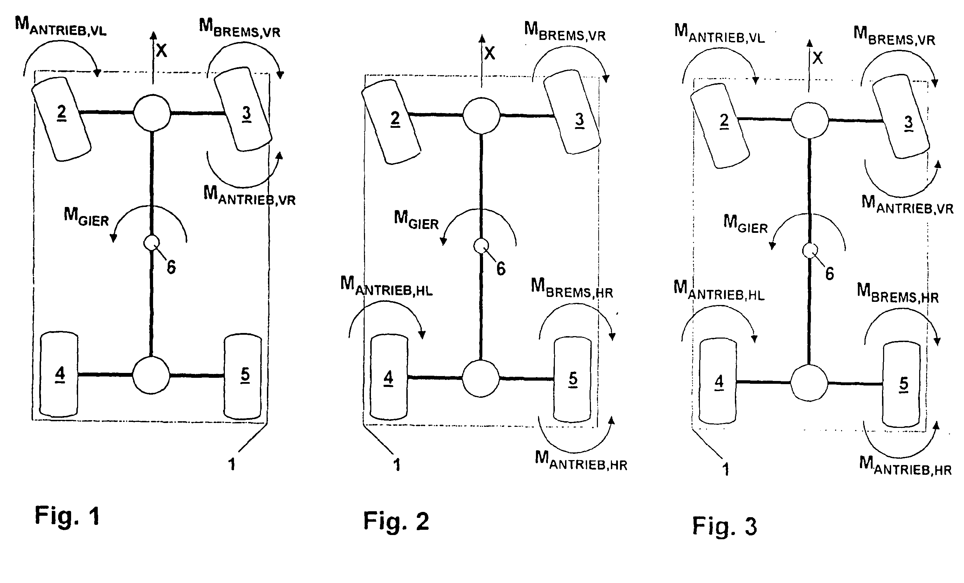

Das schematisch dargestellte Fahrzeug 1 ist in Fig. 1 bis 3 jeweils identisch. Das Fahrzeug 1 weist ein linkes und ein rechtes lenkbares Vorderrad 2, 3 sowie ein linkes und rechtes Hinterrad 4, 5 auf. Die Vorwärtsbewegung des Fahrzeugs 1 erfolgt in Fahrtrichtung X, wobei die lenkbaren Vorderräder 2, 3 nach links eingeschlagen sind, so dass das Fahrzeug 1 für das Ausführungsbeispiel eine Linkskurve fährt. In diesem Fall bricht das Heck des Fahrzeugs 1 beim Übersteuern seitlich nach rechts aus, so dass das Fahrzeug 1 einen kleineren Kurvenradius, als er dem Lenkeinschlag der Vorderräder 2, 3 entspricht, fährt.

Bei einer Fahrdynamikregelung wird unter anderem das Giermoment M_{GIER} des Fahrzeugs 1 um seine Hochachse 6 und der vom Fahrere vorgegebene Lenkeinschlag bzw, Lenkwinkel der Vorderräder 2, 3 erfasst und ausgewertet, um ein Übersteuern frühzeitig zu erkennen. Wenn ein Übersteuern erkannt ist, wird über das Bremssystem an dem kurvenäusseren Vorderrad ein Bremsmoment M_{BREMS} aufgebaut, das dem Giermoment M_{GIER} des Fahrzeugs 1 um seine Hochachse 6 entgegenwirkt, um das Fahrzeugverhalten zu stabilisieren.

Da das Fahrzeug 1 im Ausführungsbeispiel eine Linkskurve fährt, wird an dem rechten Vorderrad 3 ein Bremsmoment M_{BREMS,VR} aufgebaut.

Gemäss der Erfindung wird zusätzlich zu dem Bremsmoment M_{BREMS} an dem kurvenäusseren Vorderrad ein Antriebsmoment M_{ANTRIEB} an den angetriebenen Rädern aufgebaut. Wie sich dies bei den verschiedenen Antriebsarten verhält, wird im folgenden erläutert.

### Fig. 1 - Frontantrieb

Bei einem frontgetriebenen Fahrzeug wird an dem linken Vorderrad 2 ein Antriebsmoment M_{ANTRIEB,VL}, und an dem rechten Vorderrad 3 ein Antriebsmoment M_{ANTRIEB,VR} zusätzlich erzeugt. Zwar wird an dem rechten Vorderrad 3 das Bremsmoment M_{BREMS,VR} durch das zusätzliche Antriebsmoment M_{ANTRIEB,VR} in einem "bestimmten Masse" geschwächt, allerdings wird durch das zusätzliche Antriebsmoment M_{ANTRIEB,VL} am linken Vorderrad 2 eine weitere Komponente erzeugt, die dem Giermoment M_{GIER} des Fahrzeugs 1 um seine Hochachse 6 entgegenwirkt.

Vorzugsweise wird an den angetriebenen Vorderrädern 2, 3 ein zusätzliches Gesamtantriebsmoment M_{ANTRIEB},_{GESAMT} aufgebaut, das dem an dem kurvenäusseren Vorderrad 3 eingestellten Bremsmoment M_{BREMS,VR} entspricht, also M_{ANTRIEB,GESAMT} = M_{BREMS,vR} ist. Das Gesamtantriebsmoment M_{ANTRIEB,GESAMT} verteilt sich zu gleichen Teilen auf die angetriebenen Vorderräder 2, 3, so dass für die Radantriebsmomente M_{ANTRIEB,VL} = M_{ANTRIEB,VR} = ½ M_{BREMS,VR} gilt. Folglich wird an dem kurvenäusseren Vorderrad 3 das Bremsmoment M_{BREMS,VR} durch das zusätzliche Antriebsmoment M_{ANTRIEB,VR} um die Hälfte reduziert. Da parallel an dem kurveninneren Vorderrad 2 ein zusätzliches Antriebsmoment M_{ANTRIEB,VL} zur Verfügung steht, das der Reduktion des Bremsmomentes M_{BREMS,VR} an dem kurvenäusseren Vorderrad 3 entspricht, verhält sich die Momentenbilanz insgesamt zumindest neutral, um dem Giermoment M_{GIER} des Fahrzeugs 1 um seine Hochachse 6 entgegenzuwirken. Auch wenn nicht unbedingt ein höheres Gegengiermoment erzeugt wird, ist für die Erfindung wesentlich, dass das Giermoment M_{GIER} des Fahrzeugs 1 beim Übersteuern gleichermassen über beide Vorderräder 2,3 statt nur über das kurvenäussere Vorderrad 3 abgefangen wird. Dadurch wird nicht nur die Fahrstabilität schneller wiederhergestellt, sondern der Regelvorgang läuft insgesamt harmonischer ab.

### Fig. 2 - Heckantrieb

Bei einem heckgetriebenen Fahrzeug wird an dem linken Hinterrad 4 ein Antriebsmoment M_{ANTRIEB,HL} und an dem rechten Hinterrad 5 ein Antriebsmoment M_{ANTRIEB,HR} zusätzlich erzeugt. Durch das zusätzliche Antriebsmoment M_{ANTRIEB,HL} an dem linken Hinterrad 4 wird eine weitere Komponente erzeugt, die dem Giermoment M_{GIER} des Fahrzeugs 1 um seine Hochachse 6 entgegenwirkt. Dabei schwächt das an dem rechten Hinterrad 5 erzeugte Antriebsmoment M_{ANTRIEB,HR} die von dem zusätzlichen Antriebsmoment M_{ANTRIEB,HL} an dem linken Hinterrad 4 erzeugte weitere Komponente in einem "bestimmten Masse". Um dem entgegenzuwirken kann das an dem rechten Hinterrad 5 erzeugte Antriebsmoment M_{ANTRIEB,HR} zumindest kompensiert werden, in dem an dem rechten Hinterrad 5 ein zusätzliches Bremmoment M_{BREMS,HR} aufgebaut wird, so dass an dem linken Hinterrad 4 erzeugte Antriebsmoment M_{ANTRIEB,HL} dem Giermoment M_{GIER} des Fahrzeugs 1 um seine Hochachse 6 noch stärker entgegenwirkt.

Vorzugsweise wird an den angetriebenen Hinterrädern 4, 5 ein zusätzliches Gesamtantriebsmoment M_{ANTRIEB,GESAMT} aufgebaut, das dem an dem kurvenäusseren Vorderrad 3 eingestellten Bremsmoment M_{BREMS,VR} entspricht, also M_{ANTRIEB,GESAMT} = M_{BREMS,VR} ist. Das Gesamtantriebsmoment M_{ANTRIEB,GEAMT} verteilt sich zu gleichen Teilen auf die angetriebenen Hinterräder 4, 5, so dass für die Radantriebsmomente M_{ANTRIEB,HL} = M_{ANTRIEB,HR} = ½ M_{BREMS,VR} gilt. Um das an dem kurvenäusseren Hinterrad 5 erzeugte Antriebsmoment M_{ANTRIEB,HR} zu kompensieren, wird vorzugsweise an dem kurvenäusseren Hinterrad 5 ein zusätzliches Bremsmoment M_{BREMS,HR} aufgebaut, das der Hälfte des an dem kurvenäusseren Vorderrad 3 eingestellten Bremsmomentes M_{BPEMS,VR} entspricht, also M_{BREMS,HR} = M_{ANTRIEB,HR} = ½ M_{BREMS,VR} ist. Dadurch wird durch das an dem kurveninneren Hinterrad 4 erzeugte Antriebsmoment M_{ANTRIEB,HL} ein zusätzliches Gegengiermoment zur Verfügung gestellt. Wesentlich für die Erfindung ist aber, dass das Giermoment M_{GIER} des Fahrzeugs 1 beim Übersteuern über beide Hinterräder 4, 5 bzw. wenigstens das kurveninnere Hinterrad 4 und das kurvenäussere Vorderrad 3 statt nur über das kurvenäussere Vorderrad 3 abgefangen wird, so dass der Regelvorgang insgesamt harmonischer abläuft und die Fahrstabilität schneller wiederhergestellt wird.

### Fig. 3 - Allradantrieb

Bei einem allradgetriebenen Fahrzeug werden an dem linken Vorderrad 2 ein Antriebsmoment M_{ANTRIENB,VL}), an dem rechten Vorderrad 3 ein Antriebsmoment M_{ANTRIEB,VR}), an dem linken Hinterrad 4 ein Antriebsmoment M_{ANTRIEB,HL} und an dem rechten Hinterrad 5 ein Antriebsmoment M_{ANTRIEB,HR} zusätzlich erzeugt. Durch die zusätzlichen Antriebsmomente M_{ANTRIEB,VL}, M_{ANTRIEB,HL} an dem linken Vorder- und Hinterrad 2, 4 werden weitere Komponenten erzeugt, die dem Giermoment M_{GIER} des Fahrzeugs 1 um seine Hochachse 6 entgegenwirken. Auch hier schwächen die zusätzlichen Antriebsmomente M_{AHTRIEB,VR}, M_{ANTRIEB,HR} an dem rechten Vorder- und Hinterrad 3, 5 die Gegenkomponenten in einem "bestimmten Masse". Um dies zumindest zu kompensieren, kann auch hier an dem rechten Hinterrad 5 ein zusätzliches Bremmoment M_{BREMS,VR} aufgebaut werden.

Insgesamt betrachtet werden bei einem Fahrzeug mit Allradantrieb die Regelvorgänge bei Front- und Heckantrieb superponiert. Dadurch wird das Giermoment M_{CIER} des Fahrzeugs 1 beim Übersteuern über beide Vorderräder 2,3 und beide Hinterräder 4, 5 bzw. wenigstens das kurveninnere Hinterrad 4 statt nur über das kurvenäussere Vorderrad 3 abgefangen, so dass ein harmonischer Regelvorgang ergibt und die Fahrstabilität schneller wiederhergestellt wird.

Im Zusammenhang mit der Erläuterung von Fig. 1 bis 3 wird erwähnt, dass eine Schwächung der/des Antriebsmomente(s) in einem "bestimmten Mass" erfolgen kann. Dieses Mass ist im wesentlichen bestimmt von Fahrzeugparametern im stationären und dynamischen Zustand, wie beipielsweise Spurweite, Achsabstand, Lenkwinkel, Schwerpunktslage und Achslastverteilung, sowie aüsseren Einflüssen, wie beispielsweise der Beschaffenheit der Fahrbahnoberfläche.

Wie das zusätzlich an dem kurvenäusseren Vorderrad erzeugte Bremsmoment und das an den angetriebenen Rädern zusätzlich aufgebaute Antriebsmoment sowohl grössenordnungsmässig als auch verlaufsmässig (z.B. sprungförmig oder rampenförmig) eingestellt werden, wird bestimmt aus der Abweichung des vom Fahrer vorgegebenen Lenkeinschlags bzw. Lenkwinkels von der tatsächlichen Gierbewegung des Fahrzeugs um seine Hochachse, wobei auch die zeitlichen Ableitungen (Giergeschwindigkeit) dieser Abweichung herangezogen werden. Darüberhinaus werden vorgenannte Fahrzeugparameter im stationären und dynamischen Zustand berücksichtigt.

Auch wenn im Ausführungsbeispiel das Fahren einer Linkskurve betrachtet wird, so ist jedenfalls einem Fachmann ohne weiteres verständlich, wie sich die Erfindung beim Fahren einer Rechtskurve auswirkt, wobei das Heck des Fahrzeugs beim Übersteuern seitlich nach links ausbricht und zum Stabilisieren des Fahrverhaltens zunächst an dem linken Vorderrad ein Bremsmoment aufgebaut wird.

## Patentansprüche

1. System zur Fahrdynamikregelung, das über das Bremssystem und den Antriebsstrang (6) eines Fahrzeugs (1) wirkt, um ein seitliches Ausbrechen des Fahrzeugs (1) zu verhindern, wobei zum Verhindern eines Übersteuern des Fahrzeugs (1) über das Bremssystem an dem kurvenäusseren Vorderrad (3) ein Bremsmoment (M_{BREMS,VR}) erzeugt wird und über den Antriebsstrang (6) an den angetriebenen Rädern (2, 3, 4, 5) ein zusätzliches Antriebsmoment (M_{ANTRIEB,VR}, M_{ANTREB,VL}, M_{ANMEB,HR}, M_{ANTRIEB,HL}) aufgebaut wird und wobei eine über-oder untergeordnete Antriebsschlupfregelung eingreift, wenn aufgrund des zusätzlich aufgebauten Antriebsmoments (M_{ANTRIEB,VR}, M_{ANTRIEB,VL}, M_{ANTRIEB,HR}, M_{ANTREB,HL}) der Schlupf an einem oder mehreren angetriebenen Rädern (2, 3, 4, 5) einen vorherbestimmten Wert überschreitet, **dadurch gekennzeichnet, dass** zuerst das zusätzliche Antriebsmoment (M_{ANTRIEB,VR}, M_{ANTRIEB,VL}, M_{ANTRIEB,HR}, M_{ANTRIEB,HL}) an den angetriebenen Rädern (2, 3, 4, 5) aufgebaut wird und erst dann, wenn das Übersteuern des Fahrzeugs (1) nach einer vorherbestimmten Zeitdauer nicht abnimmt, das Bremsmoment (M_{BREMS,VR}) an dem kurvenäusseren Vorderrad (3) erzeugt wird.

2. System nach Anspruch 1, **dadurch gekennzeichnet, dass** das an dem kurvenäusseren Vorderrad (3) erzeugte Bremsmoment (M_{BREMS,VR}) erst dann aufgebaut wird, wenn das zusätzliche Antriebsmoment (M_{ANTRIEB,VR}, M_{ANTRIEB,VL}, M_{ANTRIEB,HR}, M_{ANTRIEB,HL}) an den angetriebenen Rädern (2, 3, 4, 5) einen vorherbestimmten Wert erreicht hat.

3. System nach Anspruch 1 oder 2, **dadurch gekennzeichnet, dass** das an dem kurvenäusseren Vorderrad (3) erzeugte Bremsmoment (M_{BREMS,VR}) grössenordnungsmässig doppelt so gross ist, wie das an einem angetriebenen Rad (2, 3, 4, 5) zuvor zusätzlich aufgebaute Antriebsmoment (M_{ANTRIEB,VR}, M_{ANTRIEB,VL}, M_{ANTRIEB,HR}, M_{ANTRIEB,HL}).

4. System zur Fahrdynamikregelung, das über das Bremssystem und den Antriebsstrang (6) eines Fahrzeugs (1) wirkt, um ein seitliches Ausbrechen des Fahrzeugs (1) zu verhindern, wobei zum Verhindern eines Übersteuern des Fahrzeugs (1) über das Bremssystem an dem kurvenäusseren Vorderrad (3) ein Bremsmoment (M_{BREMS,VR}) erzeugt wird und über den Antriebsstrang (6) an den angetriebenen Rädern (2, 3, 4, 5) ein zusätzliches Antriebsmoment (M_{ANTRIEB,VR}, M_{ANTRIEB,VL}, M_{ANTRIEB,HR}, M_{ANTRIEB,HL}) aufgebaut wird und wobei eine über-oder untergeordnete Antriebsschlupfregelung eingreift, wenn aufgrund des zusätzlich aufgebauten Antriebsmoments (M_{ANTRIEB,VR}, M_{ANTRIEB,VL}, M_{ANTRIEB,HR}, M_{ANTRIEB,HL}) der Schlupf an einem oder mehreren angetriebenen Rädern (2, 3, 4, 5) einen vorherbestimmten Wert überschreitet, **dadurch gekennzeichnet, dass** dann, wenn das zusätzliche Antriebsmoment (M_{ANTRIEB,HR}, M_{ANTRIEB,HL}) an den Hinterrädern (4, 5) aufgebaut wird, an dem kurvenäusseren Hinterrad (5) ein zusätzliches Bremsmoment (M_{BREMS,HR}) erzeugt wird.

5. System nach Anspruch 4, **dadurch gekennzeichnet, dass** das an dem kurvenäusseren Hinterrad (5) zusätzlich erzeugte Bremsmoment (M_{BRMS,HR}) grössenordnungsmässig gleich gross ist, wie das an dem kurveninneren Hinterrad (4) zuvor aufgebaute Antriebsmoment (M_{ANTRIEB,HL}).

6. System nach Anspruch 4 oder 5, **dadurch gekennzeichnet, dass** das zusätzliche Bremsmoment (M_{BREMS,HR}) an dem kurvenäusseren Hinterrad (5) erst dann erzeugt wird, wenn das Übersteuern des Fahrzeugs nach einer vorherbestimmten Zeitdauer nicht abnimmt.

7. System nach einem der Ansprüche 4 bis 6, **dadurch gekennzeichnet, dass** das zusätzliche Bremsmoment (M_{BREMS,HR}) an dem kurvenäusseren Hinterrad (5) erst dann erzeugt wird, wenn das an dem kurvenäusseren Hinterrad (5) erzeugte Antriebsmoment (M_{ANTRIEB,HR}) einen vorherbestimmten Wert erreicht hat.

## Claims

1. System for controlling vehicle-movement dynamics, which operates by means of the braking system and the drive train (6) of a vehicle (1) in order to prevent lateral breakaway of the vehicle (1), wherein a braking moment (M_{BRAKE,FR}) is produced, by means of the braking system, on the front wheel (3) on the outside of the bend, and an additional drive moment (M_{DRIVE},_{FR}, M_{DRIVE,FL}, M_{DRIVE,RR}, M_{DRIVE,RL}) is built up, by means of the drive train (6), on the driven wheels (2, 3, 4, 5), for the purpose of preventing oversteering of the vehicle (1), and wherein a higher-order or lower-order drive-slip control comes into action if the slip on one or more driven wheels (2, 3, 4, 5) exceeds a predetermined value due to the additionally built-up drive moment (M_{DRIVE,FR}, M_{DRNE,FL}, M_{DRIVE,RR}, M_{DRIVE,RL}), **characterized in that** the additional drive moment (M_{DRIVE,FR}, M_{DRIVE,FL}, M_{DRIVE,RR}, M_{DRIVE,RL}) is first built up on the driven wheels (2, 3, 4, 5), and the braking moment (M_{BRAKE,FR}) is produced on the front wheel (3) on the outside of the bend only if the oversteer of the vehicle (1) does not decrease after a predetermined period of time.

2. System according to claim 1, **characterized in that** the braking moment (M_{BRA-KE,FR}) produced on the front wheel (3) on the outside of the bend is built up only if the additional drive moment (M_{DRIVE,FR}, M_{DRIVE,FL}, M_{DRIVE,RR}, M_{DRNE,RL}) on the driven wheels (2, 3, 4, 5) has attained a predetermined value.

3. System according to claim 1 or 2, **characterized in that** the braking moment (M_{BRAKE,FR}) produced on the front wheel (3) on the outside of the bend is of an order of magnitude which is double that of the drive moment (M_{DRIVE,FR}, M_{DRIVE,FL}, M_{DRIVE,RR}, M_{DRIVE,RL}) previously built up additionally on a driven wheel (2, 3, 4, 5).

4. System for controlling vehicle-movement dynamics, which operates by means of the braking system and the drive train (6) of a vehicle (1) in order to prevent lateral breakaway of the vehicle (1), wherein a braking moment (M_{BRAKE,FR}) is produced, by means of the braking system, on the front wheel (3) on the outside of the bend, and an additional drive moment (M_{DRIVE,FR}, M_{DPIVE,FL}, M_{DRIVE,RR}, M_{DRIVE,RL}) is built up, by means of the drive train (6), on the driven wheels (2, 3, 4, 5), for the purpose of preventing oversteering of the vehicle (1), and wherein a higher-order or lower-order drive-slip control comes into action if the slip on one or more driven wheels (2, 3, 4, 5) exceeds a predetermined value due to the additionally built-up drive moment (M_{DRIVE,FR}, M_{DRIVE,FL}, M_{DRIVE,RR}, M_{DRIVE,RL}), **characterized in that** an additional braking moment (M_{BRAKE,RR}) is produced on the rear wheel (5) on the outside of the bend when the additional drive moment (M_{DRIVE,RR}, M_{DRIVE,RL}) is built up on the rear wheels (4, 5).

5. System according to claim 4, **characterized in that** the braking moment (M_{BRAKE,RR}) additionally produced on the rear wheel (5) on the outside of the bend is of an order of magnitude which is equal to that of the drive moment (M_{DRIVE,RL}) previously built up on the rear wheel (4) on the inside of the bend.

6. System according to claim 4 or 5, **characterized in that** the additional braking moment (M_{BRAKE,RR}) is produced on the rear wheel (5) on the outside of the bend only if the oversteer of the vehicle does not decrease after a predetermined period of time.

7. System according to any one of claims 4 to 6, **characterized in that** the additional braking moment (M_{BRAKE,RR}) is produced on the rear wheel (5) on the outside of the bend only if the drive moment (M_{DRIVE,RR}) produced on the rear wheel (5) on the outside of the bend has attained a predetermined value.

## Revendications

1. Système de réglage de la dynamique de translation qui agit par l'intermédiaire du système de freinage et de la ligne de transmission (6) d'un véhicule (1) pour empêcher le dérapage latéral du véhicule (1), le système de freinage produisant un couple de freinage (M_{BREMS, VR}) sur la roue avant extérieure au virage (3) et la ligne de transmission (6) établissant un couple moteur supplémentaire (M_{ANTRIEB, VR}, M_{ANTRIEB, VL}, M_{ANTRIEB, HR}, M_{ANTRIEB, HL}) sur les roues motrices (2, 3, 4, 5) pour empêcher le survirage du véhicule (1), et une régulation du glissement d'entraînement de niveau supérieur ou inférieur intervenant lorsque, du fait du couple moteur supplémentaire (M_{ANTRIEB, VR}, M_{ANTRIEB, VL}, M_{ANTRIEB, HR}, M_{ANTRIEB, HL}) établi, le glissement à une ou plusieurs roues motrices (2, 3, 4, 5) excède une valeur prédéfinie, **caractérisé en ce qu'**il y a tout d'abord établissement du couple moteur supplémentaire (M_{ANTRIEB, VR}, M_{ANTRIEB, VL}, M_{ANTRIEB, HR}, M_{ANTRIEB, HL}) sur les roues motrices (2, 3, 4, 5) et production du couple de freinage (M_{BREMS, VR}) sur la roue avant extérieure au virage (3) seulement lorsque le survirage du véhicule (1) perdure au-delà d'un laps de temps prédéfini.

2. Système selon la revendication 1, **caractérisé en ce qu'**il y a établissement du couple de freinage (M_{BREMS, VR}) sur la roue avant extérieure au virage (3) seulement lorsque le couple moteur supplémentaire (M_{ANTRIEB, VR}, M_{ANTRIEB, VL}, M_{ANTRIEB, HR}, M_{ANTRIEB, HL}) sur les roues motrices (2, 3, 4, 5) atteint une valeur prédéfinie.

3. Système selon la revendication 1 ou 2, **caractérisé en ce que** le couple de freinage (M_{BREMS, VR}) produit sur la roue avant extérieure au virage (3) est, en ordre de grandeur, deux fois plus important que le couple moteur supplémentaire (M_{ANTRIEB, VR}, M_{ANTRIEB, VL}, M_{ANTRIEB, HR}, M_{ANTRIEB, HL}) établi préalablement sur une roue motrice (2, 3, 4, 5).

4. Système de réglage de la dynamique de translation qui agit par l'intermédiaire du système de freinage et de la ligne de transmission (6) d'un véhicule (1) pour empêcher le dérapage latéral du véhicule (1), le système de freinage produisant un couple de freinage (M_{BREMS, VR}) sur la roue avant extérieure au virage (3) et la ligne de transmission (6) établissant un couple moteur supplémentaire (M_{ANTRIEB, VR}, M_{ANTRIEB, VL}, M_{ANTRIEB, HR}, M_{ANTRIEB, HL}) sur les roues motrices (2, 3, 4, 5) pour empêcher le survirage du véhicule (1), et une régulation du glissement d'entraînement de niveau supérieur ou inférieur intervenant lorsque, du fait du couple moteur supplémentaire (M_{ANTRIEB, VR}, M_{ANTRIEB, VL}, M_{ANTRIEB, HR}, M_{ANTRIEB, HL}) établi, le glissement à une ou plusieurs roues motrices (2, 3, 4, 5) excède une valeur prédéfinie, **caractérisé en ce qu'**il y a production d'un couple de freinage supplémentaire (M_{BREMS, HR}) sur la roue arrière extérieure au virage (5) seulement lorsqu'est établi le couple moteur supplémentaire (M_{ANTRIEB, HR}, M_{ANTRIEB, HL}) sur les roues arrière (4, 5).

5. Système selon la revendication 4, **caractérisé en ce que** le couple de freinage (M_{BREMS, HR}) produit en plus sur la roue arrière extérieure au virage (5) est, en ordre de grandeur, aussi important que le couple moteur (M_{ANTRIEB, HL}) établi préalablement sur la roue arrière extérieure au virage (4).

6. Système selon la revendication 4 ou 5, **caractérisé en ce que** le couple de freinage supplémentaire (M_{BREMS, HR}) est produit sur la roue arrière extérieure au virage (5) seulement lorsque le survirage du véhicule perdure au-delà d'un laps de temps prédéfini.

7. Système selon l'une des revendications 4 à 6, **caractérisé en ce que** le couple de freinage supplémentaire (M_{BREMS, HR}) est produit sur la roue arrière extérieure au virage (5) seulement lorsque le couple moteur (M_{ANTRIEB, HR}) sur la roue arrière extérieure au virage (5) atteint une valeur prédéfinie.
